# EUROPEAN PATENT SPECIFICATION

(11) **EP 2 549 824 B1**
(45) Date of publication and mention of the grant of the patent: **04.12.2019**
(21) Application number: 10850484.6
(22) Date of filing: 28.04.2010
(51) Int. Cl.: H04W 76/18

(54) **METHOD, DEVICE AND SYSTEM FOR ABORTING CIRCUIT SWITCHED FALLBACK CALL**
VERFAHREN, VORRICHTUNG UND SYSTEM ZUR UNTERBRECHUNG EINES LEITUNGSVERMITTELTEN FALLBACK-ANRUFS
PROCÉDÉ, DISPOSITIF ET SYSTÈME POUR ABANDONNER UN APPEL À REPLI SUR COMMUTATION DE CIRCUITS

(43) Date of publication of application: 23.01.2013
(73) Proprietor: Huawei Technologies Co., Ltd., Longgang District Shenzhen, Guangdong 518129 (CN)
(72) Inventor: CHEN, Haiyong, Shenzhen Guangdong 518129 (CN)
(74) Representative: Pfenning, Meinig & Partner mbB
(86) International application number: PCT/CN2010/072312
(87) International publication number: WO 2011/134151

(56) References cited:
- WO-A1-2009/095777
- CN-A- 101 583 121
- CN-A- 101 600 190
- "3rd Generation Partnership Project; Technical Specification Group Core Network and Terminals; Mobility Management Entity (MME) â Visitor Location Register (VLR) SGs interface specification (Release 9)", 3GPP STANDARD; 3GPP TS 29.118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 31 March 2010 (2010-03-31), pages 1-55, XP050402254, [retrieved on 2010-03-31]
- HUAWEI: "Discussion on call cancellation for CSFB MT", 3GPP DRAFT; C1-101318_DISCUSSION ON CALL CANCELLATION FOR CSFB MT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Kyoto; 20100510, 17 May 2010 (2010-05-17), XP050409257, [retrieved on 2010-05-17]

## Description

### FIELD OF THE INVENTION

Embodiments of the present invention relate to the field of communications technologies, and in particular, to a method, a device and a system for aborting circuit switched fallback call.

### BACKGROUND OF THE INVENTION

GPRS/UMTS is a mobile communication network defined by the 3GPP organization, and is widely deployed. Both a radio access network (Radio Access Network, called RAN for short below) and a core network (Core Network, CN) are included. The CN is logically divided into a circuit switched domain (Circuit Switched Domain, CS) and a packet switched domain (Packet Switched Domain, PS). The CS domain mainly processes a voice service, and the PS domain mainly processes a packet service. The signaling plane control entity of the CS domain is a mobile switch center/visitor location register (Mobile Switch Center/Visitor Location Register, MSC/VLR), and the signaling plane control entity of the PS domain is a serving GPRS support node (Serving GPRS Support Node, SGSN). Generally, the GPRS/UMTS network is called a 2G/3G network for short.

With the rapid development of the radio communication network, the former 2G/3G network has failed to satisfy demands of users on bandwidth, QoS, and so on. The 3GPP organization made a long term evolution (Long Term Evolution, LTE) at the end of the year 2004. The architecture of a new mobile communication network has been defined with the guidance of the long term evolution, where the architecture is flatter than current 2G/3G network architecture, and only keeps the packet domain, which therefore is called an evolved packet system (evolved packet system, EPS).

All conventional operators provide voice services and other circuit-domain-related supplementary services, for example, a fax service, through a 2G/3G network circuit domain before deploying an EPS network. During the initial stage of the deployment of the EPS network, the operators commonly choose to reuse an existing 2G/3G network to provide voice services and other circuit-domain-related supplementary services. In order to achieve this function, a method of connecting to a 2G/3G circuit domain core network through an EPS core network is presented in the EPS, so that a user may return to the 2G/3G circuit domain through the EPS network quickly to accomplish a circuit domain service. The architecture and the processing method may be called circuit switched fallback (CS Fallback, CSFB). Under a typical CSFB architecture, a mobility management entity (Mobility Management Entity, MME) in the EPS network is connected to the MSC/VLR of a conventional 2G/3G circuit domain core network through an SGs interface.

For a scenario in which a calling side initiates a call release before a callee is put through, in accordance with a current CSFB call terminating mechanism, the MME cannot be aware that the calling side has released a call, and the MME may still trigger a subsequent call progress of the CSFB after receiving an extended service request of a user equipment (UE), and may send a paging response message to the MSC through the circuit domain. Because call resources in the MSC have been released, the MSC considers the received paging response message as an abnormal message, and discards the message.

In the current CSFB call mechanism, because the MME cannot be aware that the calling side has released the call, a switch from the LTE to the 2G/3G may still be performed on a callee side, and the UE may switch back to the LTE. Two invalid switches waste network resources. Furthermore, the called user finds it is impossible to communicate after choosing to answer the call, and due to a switch that has occurred, an ongoing PS service of the user is affected, and the user experience is degraded.

"3rd Generation Partnership Project; Technical Specification Group Core Network and Terminals; Mobility Management Entity (MME) a Visitor Location Register (VLR) SGs interface specification (Release 9)", XP050402254, 31 March 2010, discloses that when the VLR determines that there are no more NAS messages to be exchanged between the VLR and the UE, the VLR shall send the SGsAP-RELEASE-REQUEST message to the MME, including the IMSI of the UE for which there are no more NAS messages to be tunnelled. This indication can be used by the MME to control the release of the NAS signalling connection with the UE indicated in the SGsAP-RELEASE-REQUEST message.

### SUMMARY OF THE INVENTION

The present invention is as defined in the appended independent claims. Embodiments of the present invention provide a method for aborting a CSFB call, a mobility management entity, a visitor location register, and a communication system, so as to solve a problem in a CSFB call flow of the prior art that a UE invalidly switches back to 2G/3G due to the imperceptibility of an MME after a call release is initiated by a calling side.

An aspect of the present invention provides a method for aborting a CSFB call, which includes:
judging, by a VLR, whether a call needs to be aborted; and
if the call needs to be aborted, sending, to an MME, an SGs message indicating a call abort, so that the MME rejects the CSFB call.

An aspect of the present invention further provides a mobility management entity, which includes:
a receiving unit, configured to receive an SGs message sent by a visitor location register VLR and indicating a call abort; and
a call rejecting unit, configured to reject a CSFB call.

An embodiment of the present invention further provides a visitor location register, which includes:
a call abort judging unit, configured to judge whether a call needs to be aborted; and
a sending unit, configured to: if the call needs to be aborted, send, to an MME, an SGs message indicating a call abort, so that the MME rejects the CSFB call.

Correspondingly, an aspect of the present invention further provides a communication system, which includes:
a visitor location register, configured to judge whether a call needs to be aborted, and if the call needs to be aborted, send, to an MME, an SGs message indicating a call abort; and
the mobility management entity, configured to receive the SGs message sent by the visitor location register and reject the CSFB call.

According to the method, the device and the system provided by the embodiments of the present invention, by sending, to the MME, the SGs message indicating the call abort, enable the MME to reject the CSFB call, and after the call release is initiated by the calling side, the switch to the 2G/3G initiated by the callee UE may be prevented, which saves network resources; meanwhile, the degradation of user service experience due to an invalid switch is avoided.

### BRIEF DESCRIPTION OF THE DRAWINGS

To make the technical solutions of the embodiments of the present invention or the prior art clearer, the accompanying drawings used in the description of the embodiments or the prior art are briefly described hereunder. Evidently, the accompanying drawings illustrate some exemplary embodiments of the present invention and persons skilled in the art may obtain other drawings based on these drawings without creative efforts.
FIG. 1 is a flowchart of a method according to Embodiment 1 of the present invention;
FIG. 2 is a flowchart of a method according to Embodiment 2 of the present invention;

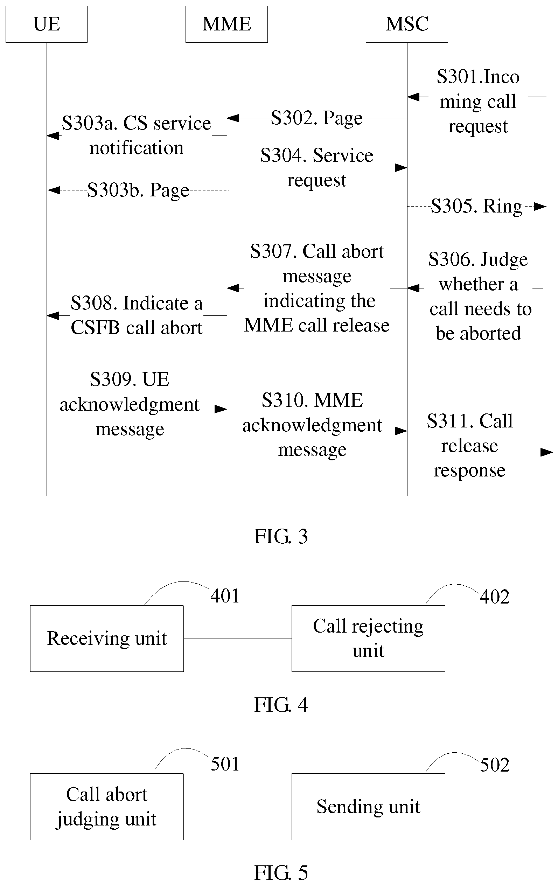

FIG. 3 is a flowchart of a method according to Embodiment 3 of the present invention;
FIG.4 is a structural block diagram of a mobility management entity according to Embodiment 4 of the present invention;
FIG.5 is a structural block diagram of a visitor location register according to Embodiment 5 of the present invention; and

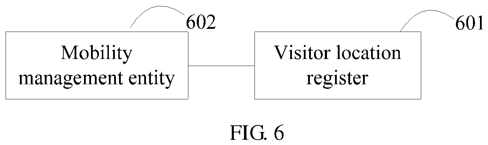

FIG.6 is a schematic diagram of a communication system according to Embodiment of the present invention.

### DETAILED DESCRIPTION

In order to make the objectives, technical solutions, and advantages of the present invention more comprehensible, the technical solutions according to the embodiments of the present invention are clearly and completely described in the following with reference to the accompanying drawings. Apparently, the embodiments in the following description are merely a part rather than all of the embodiments of the present invention. Based on the embodiments here, persons skilled in the art may derive other embodiments without creative efforts and such other embodiments all fall within the protection scope of the present invention.

### Aspect 1

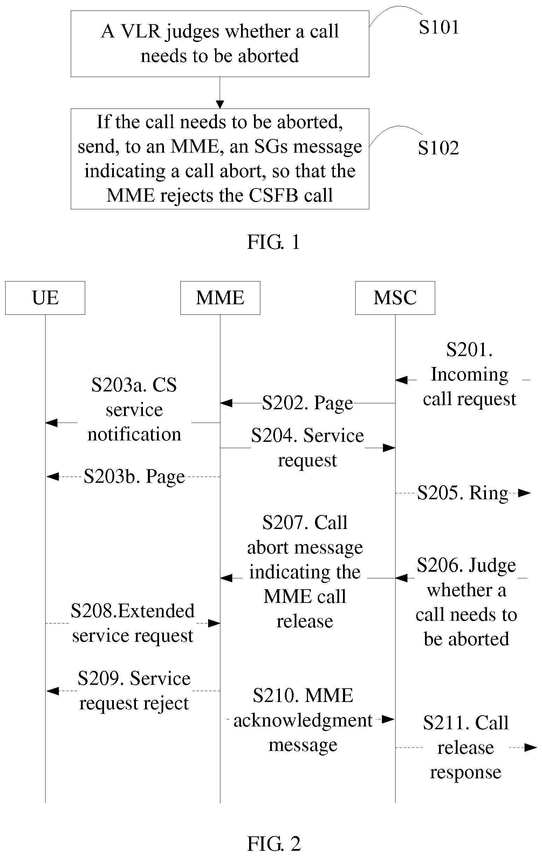

FIG.1 is a flowchart of a method embodiment of a circuit switched domain service fallback of the present invention, and as shown in FIG.1, the method may include:
S101: A VLR judges whether a call needs to be aborted.

An MSC and the VLR in all embodiments of the present invention may be integrated and collectively called the VLR.

The VLR may judge, according to a received message initiated by a caller, whether the call needs to be aborted. For example, if a call release message, or a call abort message, or a call cancel message is initiated by the caller, a judging result of the VLR is that the call needs to be aborted.

A specific reason for the caller initiating the call release message before a callee is put through may be that the calling user actively hangs up, the caller VLR is overloaded, the caller VLR aborts the call due to an operation management OM operation, or the calling user actively aborts the call due to an operation mistake.

S102: If the call needs to be aborted, send, to an MME, an SGs message indicating a call abort, so that the MME rejects the CSFB call.

The VLR may send a specific type of the SGs message to the MME, that is, MME call release is indicated through a message type, for example, the message type being "SGs service abort request"; or the MME is notified, through an indication carried in the message, that the call has been released.

After receiving the SGs message indicating the call abort, the MME learns caller call release, may directly send a call abort message to a callee UE so as to indicate the call release, and after receiving the message, the callee UE learns that the caller has released the call and ends the call flow. Alternatively, after receiving the SGs message indicating the call abort, the MME learns the caller call release, receives an extended service request message sent by the callee UE, sends a service request reject message and aborts this CSFB call.

In the embodiment, after receiving the call release message sent by the VLR, the MME rejects the CSFB call, which may prevent the invalid switch of the callee UE to the 2G/3G network, thereby saving network side resources. Meanwhile, the degradation of the service experience due to the invalid switch of the callee UE is avoided.

### Aspect 2

In a CSFB scenario, a processing flow that a caller UE actively releases a call before a callee is put through is as follows:
S201: A VLR receives an incoming call request, and judges whether a current user has an SGs association.

An SGs interface is an interface between the VLR and an MME, and messages related to circuit domain services may be transmitted in an EPS network through the SGs interface, so as to achieve a CSFB. For example, a UE may register with the VLR and register a location through the MME, and the VLR may also page the UE through the SGs interface.

If the association exists, the VLR sends a paging message to the MME through the SGs interface; if no association exists, the VLR performs paging in a circuit domain directly.

S202: The VLR sends a paging message to the MME, so as to instruct the MME to initiate paging.

S203a: If the MME detects that the UE is in a connected state, a CS service notification message is sent to the UE to indicate to the UE that a CSFB incoming call exists. Specifically, a dialog box may pop out from an interface of a callee UE to prompt the user to choose whether to accept the call.

S203b: If the MME detects that the UE is in an idle state, the MME first needs to initiate a flow of paging the UE.

S204: If the UE is in the connected state, the MME sends a service request message to the VLR directly, so as to notify to the VLR that the paging has succeeded.

It should be noted that the UE directly responds to the CSFB call if the UE is in the idle state. S205: The VLR sends a ringback tone to the calling side.

This step is an optional step, and the MSC sends the ringback tone to the UE on the calling side to avoid that the calling user hears a mute tone for a long time.

S206: The VLR judges whether the call needs to be aborted.

If a call release message initiated by the caller is received, a judging result of the VLR is that the call needs to be aborted; and if the VLR is overloaded, or the VLR aborts the call due to an operation management OM operation, the judging result of VLR is also that the call needs to be aborted.

A specific reason for the caller initiating the call release message before the callee is put through may be that the calling user actively hangs up, the caller VLR is overloaded, the caller VLR aborts the call due to the OM operation, or the calling user actively aborts the call due to an operation mistake.

S207: The VLR sends a call abort message to the MME, so as to indicate an MME call release.

Specifically, the VLR may send a specific type of the message to the MME, that is, the MME call release is indicated through the message type, for example, the message type being "SGs service abort request".

Alternatively, the VLR may notify, through an indication carried in the message, the MME that the call has been released. In addition, the "call release" here may also be "call cancel", "call abort (Abort)" and so on, which is not limited in the present invention.

After receiving this message, the MME may reject this CSFB call response initiated by the UE.

S208: The callee UE sends an extended service request message to the MME.

Because the callee UE does not learn that the caller has released the call, the callee UE still sends the extended service request message to the MME;
S209: The MME sends a service request reject message to the UE to abort this CSFB call; The UE may not switch to the 2G/3G network after receiving the service request reject message sent by the MME.

Specifically, after the call abort request from the VLR is received by the MME, it indicates that a current call has been released, for the extended service request message subsequently received from the UE, when it is judged that a cause value of the extended service request message indicates a CSFB call acceptance, the MME sends a service reject message to the callee UE.

It should be noted that the MME does not need to send a paging reject request to the VLR or further send the service reject message to the UE, if the cause value carried in the extended service request message sent by the UE indicates a CSFB call reject;

Specifically, when a call abort state recorded by the MME is valid, and the cause value in the extended service request message sent by the callee UE indicates the CSFB call acceptance, the service request reject message is sent to the callee UE; when a paging message of the VLR is received or an extended service request of the UE is received, the state of the call abort message recorded by the MME is set as invalid or cleared.

The MME may also start a timer, and if the extended service request from the UE is received before the timer expires, according to a cause value carried in the extended service request, the MME directly sends the service reject message to the callee UE or does not need to send a paging reject message to the VLR.

S210: The MME sends an acknowledgment message to the VLR.

This step is an optional step, and is used to confirm that the message of step S207 has been received.

S211: The VLR returns the "call release response" to the calling side.

This step may occur after step S201, that is, to be parallel with processing of the SGs interface.

In the embodiment, the MME rejects the CSFB call after receiving the call release message sent by the VLR, which may prevents the invalid switch of the callee UE to the 2G/3G network, thereby saving network side resources. Meanwhile, the degradation of the service experience due to the invalid switch of the callee UE is avoided.

### Aspect 3

In a CSFB scenario and before a callee is put through, another processing flow, that a caller UE actively releases a call, is as follows:
S301: A VLR receives an incoming call request, and judges whether a current user has an SGs association, that is, a SGs state is not null.

If the association exists, the VLR sends a paging message to an MME through an SGs interface; if no association exists, the VLR directly performs paging in a circuit domain.

S302: The VLR sends the paging message to the MME to instruct the MME to initiate paging.

S303a: If the MME detects that the UE is in a connected state, a CS service notification message is sent to the UE to indicate to the UE that a CSFB incoming call exists.

Specifically, a dialog box may pop out from an interface of a callee UE to prompt the user to choose whether to accept the call.

S303b: If the MME detects that the UE is in an idle state, the MME first needs to initiate a flow of paging the UE.

S304: If the UE is in the connected state, the MME directly sends a service request message to the VLR to notify an MSC that the paging has succeeded.

It should be noted that the UE directly responds to the CSFB call if the UE is in the idle state.

S305: Optionally, the VLR may send a ringback tone to the calling side to avoid that the calling user hears a mute tone for a long time.

S306: The VLR judges whether the call needs to be aborted.

If a call release message initiated by the caller is received, a judging result of the VLR is that the call needs to be aborted; and if the callee VLR is overloaded, or the callee VLR aborts the call due to an OM operation, the judging result of VLR is also that the call needs to be aborted.

A specific reason for the caller initiating the call release message before the callee is put through may be that the calling user actively hangs up, the caller VLR is overloaded, the caller VLR aborts the call due to the OM operation, or the calling user actively aborts the call due to an operation mistake.

S307: The VLR sends a call abort message to the MME, so as to indicate an MME call release.

Specifically, the VLR may send a specific type of the SGs message to the MME, that is, the MME call release is indicated through the message type, for example, the message type being "SGs service abort request".

Alternatively, the VLR may notify, through an indication carried in the message, the MME that the call has been released. In addition, the "call release" here may also be "call cancel", "call abort (Abort)" and so on, which is not limited here.

After receiving this message, the MME may reject this CSFB call response initiated by the UE.

S308: The callee UE sends the message that indicates a CSFB call abort to the callee UE so as to indicate the call release.

After receiving the message, the callee UE learns that the caller has released the call, and ends the call flow.

Specifically, the message here that indicates the CSFB call abort is specifically a non-access stratum NAS message, and the NAS message carries an information element that indicates the call abort.

S309: The UE sends an acknowledgment message to the MME.

This step is an optional step, and is used to confirm that the message in step S308 has been received.

S310: The MME sends an acknowledgment message to the VLR.

This step is an optional step, and is used to confirm that the message of step S307 has been received.

S311: The MSC may return the "call release response" to the calling side.

This step may occur after step S201, that is, to be parallel with processing of the SGs interface.

In the embodiment, the MME sends the call release message to the callee UE after receiving the call release message sent by the VLR, which may prevent the switch of the callee UE to the 2G/3G network, thereby saving network side resources. Meanwhile, the degradation of the service experience due to the invalid switch of the callee UE is avoided.

It should be noted that Embodiment 1 and Embodiment 3 may be combined, after the call release message is sent to the MME by the VLR, if the callee UE can identify the message, the callee UE learns that the call has been aborted, does not initiate the extended service request message subsequently, and aborts the call flow, and an actual processing process follows the method of Embodiment 3; and if the callee UE cannot identify the message, the UE may accept the call and send the extended service request to the network side, the MME performs the processing in accordance with the method of Embodiment 2, and the MME rejects the service request subsequently after receiving the extended service request sent by the UE.

### Aspect 4

Corresponding to the method embodiments above, Embodiment 4 of the present invention provides an MME configured to abort a CSFB call, which includes:
a receiving unit 401, configured to receive an SGs message that is sent by a VLR and for indicating a call abort; and
a call rejecting unit 402, configured to reject a CSFB call.

The receiving unit 401 here is further configured for an extended service request message sent by a callee UE. If the extended service request message received by the receiving unit 401 carries a cause value indicating that the UE accepts the CSFB call, the call rejecting unit 402 is configured to send a service request reject message to the callee UE so as to reject a CSFB call sent by the UE subsequently.

The call rejecting unit 402 here may be further configured to send, to the callee UE, a message that indicates the CSFB call abort.

Specifically, the call rejecting unit 402 may record a call abort state as valid, and when the cause value in the extended service request message sent by the callee UE indicates CSFB call acceptance, the service request reject message is sent to the callee UE; when a paging message of the VLR or an extended service request of the UE is received, the call abort state recorded by the call rejecting unit 402 is set as invalid or cleared.

The call rejecting unit 402 may also start a timer, and if the extended service request from the UE is received before the timer expires, according to a cause value carried in the extended service request, a service reject message is directly sent to the callee UE, or there is no need to send a paging reject message to the VLR.

The MME of the embodiment of the present invention rejects the CSFB call after receiving an SGs message that is sent by the VLR and indicates the call abort. That the callee UE invalidly switches back to the 2G/3G network may be avoided, so as to save network side resources. Meanwhile, the degradation of the service experience due to the invalid switch of the callee UE is avoided.

### Aspect 5

Corresponding to the method embodiments above, Embodiment 5 of the present invention provides a VLR configured to abort a CSFB call, which includes:
a call abort judging unit 501, configured to judge whether a call needs to be aborted; and
a sending unit 502, configured to send, to an MME, an SGs message that indicates a call abort, so that the MME rejects the CSFB call.

The call abort judging unit 501 here is specifically configured to receive a call release message, or a call cancel message, or a call abort message, which is sent by a caller. When it is judged that the call needs to be aborted, the sending unit 502 sends the SGs message that indicates the call abort to the MME, so as to enable the MME to reject the CSFB call, which prevents that the callee UE invalidly switches back to the 2G/3G network, so as to save network side resources. Meanwhile, the degradation of the service experience due to the invalid switch of the callee UE is avoided.

### Aspect 6

Corresponding to the method embodiments above, Embodiment 6 of the present invention provides a communication system configured to abort a CSFB call, which includes:
a visitor location register 601, configured to judge whether a call needs to be aborted, and if the call needs to be aborted, send, to an MME, an SGs message indicating a call abort; and
a mobility management entity 602, configured to receive the SGs message sent by the visitor location register 601, and reject the CSFB call.

The communication system of the embodiment of the present invention may prevent invalid switch back to the 2G/3G network by a callee UE when a caller releases the call, so as to save network side resources. Meanwhile, the degradation of the service experience due to the invalid switch of the callee UE is avoided.

It should be understood by persons skilled in the art that the accompanying drawings are merely schematic diagrams of an exemplary embodiment, and modules or processes in the accompanying drawings are not necessarily needed in implementing the present invention. Those skilled in the art may understand that the modules in the devices provided in the embodiments may be arranged in the devices in a distributed manner according to the description of the embodiments, or may be arranged in one or multiple devices which are different from those described in the embodiments. The modules according to the above embodiments may be combined into one module, or split into multiple submodules.

Finally, it should be noted that the foregoing embodiments are merely provided for describing the technical solutions of the present invention, but not intended to limit the present invention.

## Claims

1. A method for aborting a circuit switched fallback, CSFB, call, comprising:
judging (S101, S206, S306), by a visitor location register, VLR, whether a CSFB call needs to be aborted; and
if the CSFB call needs to be aborted, sending (SI02, S207, S307), to a mobility management entity, MME, an SGs message indicating a call abort, so that the MME rejects the CSFB call;
wherein the MME rejects the CSFB call, including:recording, by the MME, a call abort state as valid in response to the SGs message indicating the call abort;
receiving (S208) an extended service request message sent by a callee User Equipment, UE; and
sending (S209), by the MME, a service request reject message to the callee UE if the extended service request message carries a cause value indicating that the CSFB call is accepted by the callee UE.

2. The method according to claim 1, before the judging, by the VLR, whether the CSFB call needs to be aborted, the method further comprises:
receiving a call release message, or a call cancel message, or a call abort message, which is sent by a caller.

3. A mobility management entity, comprising:
a receiving unit (401), configured to receive an SGs message which is sent by a visitor location register, VLR, when it is judged by the VLR that a circuit switched fallback, CSFB, call, needs to be aborted, and indicates a call abort;
the receiving unit (401) is further configured to receive an extended service request message sent by a callee User Equipment, UE ;and
a call rejecting unit (402), configured to record, after an instruction is received, a call abort state as valid in response to the SGs message indicating the call abort; and further configured to receive an extended service request message sent by a callee User Equipment, UE, and send a service request reject message to the callee UE to reject the circuit switched fallback, CSFB, call if the extended service request message carries a cause value indicating that the CSFB call is accepted by the callee UE.

4. A circuit switched fallback, CSFB, communication system, comprising a visitor location register (601) and a mobility management entity (602), wherein
the visitor location register (601) is configured to: judge whether a circuit switched fallback, CSFB, call needs to be aborted, and if the CSFB call needs to be aborted, send, to the mobility management entity, MME, an SGs message indicating a call abort; and
the mobility management entity (602) is configured to receive the SGs message sent by the visitor location register, and after an instruction is received, to reject the CSFB call by recording a call abort state as valid in response to the SGs message indicating the call abort, and wherein the MME is further configured to receive an extended service request message sent by a callee User Equipment, UE, and send a service request reject message to the callee UE if the extended service request message carries a cause value indicating that the CSFB call is accepted by the callee UE.

## Patentansprüche

1. Verfahren zum Abbrechen eines leitungsvermittelten Rückfall (*circuit switched Rückfall-*CSFB)-Anrufs, Folgendes umfassend:
Beurteilen (S101, S206, S306) durch ein Besucherverzeichnis (*visitor location register-*VLR), ob ein CSFB-Anruf abgebrochen werden muss; und
wenn der CSFB-Anruf abgebrochen werden muss, Senden (S102, S207, S307) einer SG-Nachricht, die einen Anrufabbruch anzeigt, an eine Mobilitätsmanagementinstanz (*mobility management entity* - MME), sodass die MME den CSFB-Anruf verweigert;
wobei die MME den CSFB-Anruf verweigert, einschließlich:
Aufnehmen, durch die MME, eines Anrufabbruchsstatus als gültig in Reaktion auf die SG-Nachricht, die den Anrufabbruch anzeigt;
Empfangen (S208) einer erweiterten Dienstanforderungsnachricht, die durch eine angerufene Benutzereinrichtung (*User Equipment-* UE) gesendet wird; und
Senden (S209) einer Dienstanforderungsverweigerungsnachricht an die angerufene UE durch die MME, wenn die erweiterte Dienstanforderungsnachricht einen Ursachenwert trägt, der anzeigt, dass der CSFB-Anruf durch die angerufene UE angenommen wird.

2. Verfahren nach Anspruch 1, wobei das Verfahren, vor dem Beurteilen durch das VLR, ob der CSFB-Anruf abgebrochen werden muss, Folgendes umfasst:
Empfangen einer Anruffreigabenachricht, oder einer Anrufaufhebungsnachricht, oder einer Anrufabbruchsnachricht, die durch den Anrufer gesendet wird.

3. Mobilitätsmanagementinstanz, Folgendes umfassend:
eine Empfängereinheit (401), die konfiguriert ist, um eine SG-Nachricht zu empfangen, die durch ein Besucherstandortverzeichnis (VLR) gesendet wird, wenn durch das VLR beurteilt wird, dass ein leitungsvermittelter Rückfall (CSFB)-Anruf abgebrochen werden muss, und einen Anrufabbruch anzeigt;
wobei die Empfängereinheit (401) ferner konfiguriert ist, um eine erweiterte Dienstanforderungsnachricht zu empfangen, die durch eine angerufene Benutzereinrichtung (UE) gesendet wird; und
eine Anrufverweigerungseinheit (402), die konfiguriert ist, nachdem eine Anweisung empfangen wurde, einen Anrufabbruchsstatus in Reaktion auf die SG-Nachricht, die den Anrufabbruch anzeigt, als gültig aufzunehmen; und
die ferner konfiguriert ist, um eine erweiterte Dienstanforderungsnachricht zu empfangen, die durch eine angerufene Benutzereinrichtung (UE) gesendet wird, und eine Dienstanforderungsverweigerungsnachricht zu der angerufenen UE zu senden, um den leitungsvermittelten Rückfall(CSFB)-Anruf zu verweigern, wenn die erweiterte Dienstanforderungsnachricht einen Ursachenwert trägt, der anzeigt, dass der CSFB-Anruf durch die angerufene UE angenommen wird.

4. Leitungsvermitteltes Rückfall(CSFB)-Kommunikationssystem, umfassend ein Besucherstandortverzeichnis (601) und eine Mobilitätsmanagementinstanz (602), wobei das Besucherstandortverzeichnis (601) zu Folgendem konfiguriert ist:
Beurteilen, ob ein leitungsvermittelter Rückfall(CSFB)-Anruf abgebrochen werden muss, und, wenn der CSFB-Anruf abgebrochen werden muss, Senden einer SG-Nachricht, die einen Anrufabbruch anzeigt, an die Mobilitätsmanagementinstanz (MME); und
wobei die Mobilitätsmanagementinstanz (602) konfiguriert ist, um die durch das Besucherstandortverzeichnis gesendete SG-Nachricht zu empfangen, und, nachdem eine Anweisung empfangen wurde, den CSFB-Anruf, durch Aufnehmen eines Anrufabbruchsstatus in Reaktion auf die SG-Nachricht, die den Anrufabbruch anzeigt, als gültig zu verweigern, und wobei die MME ferner konfiguriert ist, eine erweiterte Dienstanforderungsnachricht zu empfangen, die durch eine angerufene Benutzereinrichtung (UE) gesendet wird, und eine Dienstanforderungsverweigerungsnachricht zu der angerufenen UE zu senden, wenn die erweiterte Dienstanforderungsnachricht einen Ursachenwert trägt, der anzeigt, dass der CSFB-Anruf durch die angerufene UE angenommen wird.

## Revendications

1. Procédé pour interrompre un appel de repli à commutation de circuits, CSFB, comprenant :
le fait de déterminer (S101, S206, S306), par un registre de localisation de visiteurs, VLR, si un appel CSFB doit être interrompu ; et
si l'appel CSFB doit être interrompu, l'envoi (S102, S207, S307), à une entité de gestion de mobilité, MME, d'un message SG indiquant une interruption d'appel, de sorte que la MME rejette l'appel CSFB ;
la MME rejetant l'appel CSFB, incluant :
l'enregistrement, par la MME, d'un état d'interruption d'appel comme valide en réponse au message SG indiquant l'interruption d'appel ;
la réception (S208) d'un message de demande de service étendu envoyé par un équipement utilisateur, UE, de la personne appelée ; et
l'envoi (S209), par la MME, d'un message de rejet de demande de service à l'UE de la personne appelée si le message de demande de service étendu contient une valeur de cause indiquant que l'appel CSFB est accepté par l'UE de la personne appelée.

2. Procédé selon la revendication 1, avant la détermination, par le VLR, que l'appel CSFB doit être interrompu, le procédé comprend en outre :
la réception d'un message de libération d'appel, d'un message d'annulation d'appel ou d'un message d'interruption d'appel, qui est envoyé par un appelant.

3. Entité de gestion de mobilité, comprenant :
une unité de réception (401), configurée pour recevoir un message SG qui est envoyé par un registre de localisation de visiteurs, VLR, lorsqu'il est déterminé par le VLR qu'un appel de repli à commutation de circuits, CSFB, doit être interrompu, et indique une interruption d'appel ;
l'unité de réception (401) est en outre configurée pour recevoir un message de demande de service étendu envoyé par un équipement utilisateur, UE de la personne appelée ; et
une unité de rejet d'appel (402), configurée pour enregistrer, après réception d'une instruction, un état d'interruption d'appel comme valide en réponse au message SG indiquant l'interruption d'appel ; et
en outre configurée pour recevoir un message de demande de service étendu envoyé par un équipement utilisateur, UE, de la personne appelée et envoyer un message de rejet de demande de service à l'UE de la personne appelée pour rejeter l'appel de repli à commutation de circuits, CSFB, si le message de demande de service étendu contient une valeur de cause indiquant que l'appel CSFB est accepté par l'UE de la personne appelée.

4. Système de communication de repli à commutation de circuits, CSFB, comprenant un registre de localisation de visiteurs (601) et une entité de gestion de mobilité (602), le registre de localisation de visiteurs (601) étant configuré pour :
déterminer si un appel de repli à commutation de circuits, CSFB, doit être interrompu, et si l'appel CSFB doit être interrompu, envoyer, à l'entité de gestion de mobilité, MME, un message SG indiquant une interruption d'appel ; et
l'entité de gestion de mobilité (602) étant configurée pour recevoir le message SG envoyé par le registre de localisation de visiteurs, et après réception d'une instruction, pour rejeter l'appel CSFB en enregistrant un état d'interruption d'appel comme valide en réponse au message SG indiquant l'interruption d'appel, et la MME étant en outre configurée pour recevoir un message de demande de service étendu envoyé par un équipement utilisateur, UE, de la personne appelée et pour envoyer un message de demande de service rejeté à l'UE de la personne appelée si le message de demande de service étendu contient une valeur de cause indiquant que l'appel CSFB est accepté par l'UE de la personne appelée.
